# EUROPEAN PATENT APPLICATION

(11) **EP 4 782 076 A1**
(43) Date of publication of application: **29.07.2026**
(21) Application number: 24882582.0
(22) Date of filing: 24.07.2024
(51) Int. Cl.: A63B 24/00, A63B 71/06, G06T 7/11, G06T 5/00

(54) **ELECTRONIC DEVICE FOR PROVIDING EXERCISE PLAN AND OPERATION METHOD THEREFOR**

(30) Priority: 27.10.2023 KR 20230146096; 20.11.2023 KR 20230161261
(71) Applicant: Samsung Electronics Co., Ltd., Suwon-si, Gyeonggi-do 16677 (KR)
(72) Inventor: PARK, Byeongju, Suwon-si Gyeonggi-do 16677 (KR); PARK, Jeongmin, Suwon-si Gyeonggi-do 16677 (KR); KIM, Jaepil, Suwon-si Gyeonggi-do 16677 (KR); YEO, Jaeyung, Suwon-si Gyeonggi-do 16677 (KR); LEE, Myeongjin, Suwon-si Gyeonggi-do 16677 (KR); CHO, Sunghwan, Suwon-si Gyeonggi-do 16677 (KR)
(74) Representative: Gulde & Partner
(86) International application number: PCT/KR2024/010685
(87) International publication number: WO 2025/089552

(57) **Abstract**

An electronic device according to an embodiment may comprise at least one processor and a memory for storing instructions. The instructions may cause, on the basis of being individually or collectively executed by the at least one processor, the electronic device to output a plurality of body type images on the basis of one or more of a user image and user information. The instructions may cause, on the basis of being individually or collectively executed by the at least one processor, the electronic device to determine, as a target body type, one or more body type images among the plurality of body type images on the basis of a user input. The instructions may cause, on the basis of being individually or collectively executed by the at least one processor, the electronic device to provide an exercise plan on the basis of one or more of the target body type and an exercise history of a user. Other various embodiments may also be possible.

## Description

### TECHNICAL FIELD

Various embodiments of the present disclosure relate to an electronic device for providing an exercise plan and an operation method therefor.

### BACKGROUND ART

With growing interest in health and fitness, various digital platforms offering personalized health and fitness coaching services have recently been proposed. These platforms provide personalized exercise plans considering users' body data, lifestyle habits, health conditions, and exercise preferences, and help maintain and improve their health.

Conventional digital health and fitness coaching services only offer users general, abstract goals, such as weight loss, muscle gain, and improved physical fitness, which makes it difficult for users to set specific, ideal body shape goals. In addition, goals including only abstract numbers or categories are unlikely to accurately reflect users' personal desires or objectives, thereby hindering exercise adherence and reducing exercise effectiveness. There is the need for a method of providing exercise plans that establish goals aligned with users' personal preferences and sustain users' motivation for regular exercise.

The above information may be presented as the related art to help with the understanding of the disclosure. No arguments or decisions are raised to whether any of the above description is applicable as the prior art related to the present disclosure.

The technical goals to be achieved are not limited to those described above, and other technical goals not mentioned above are clearly understood by one of ordinary skill in the art from the following description.

### DISCLOSURE OF THE INVENTION

### TECHNICAL SOLUTIONS

According to an embodiment, an electronic device includes at least one processor and memory storing instructions. The instructions, when executed individually or collectively by the at least one processor may cause the electronic device to output a plurality of body shape images based on one or more of a user image and user information. The instructions, when executed individually or collectively by the at least one processor may cause the electronic device to determine, based on a selection input of a user, one or more body shape images from among the plurality of body shape images as a target body shape. The instructions, when executed individually or collectively by the at least one processor may cause the electronic device to provide an exercise plan based on one or more of the target body shape and an exercise history of the user.

According to an embodiment, a method of operating an electronic device includes outputting a plurality of body shape images based on one or more of a user image and user information.

The method may include determining, based on a selection input of a user, one or more body shape images from among the plurality of body shape images as a target body shape.

The method may include providing an exercise plan based on one or more of the target body shape and an exercise history of the user.

According to an embodiment, a non-transitory computer-readable storage medium may store instructions that, when executed by a processor, cause the processor to perform the method.

### BRIEF DESCRIPTION OF DRAWINGS

FIG. 1 is a block diagram illustrating an electronic device in a network environment according to an embodiment.
FIG. 2 is a block diagram illustrating an electronic device providing an exercise plan according to an embodiment.
FIG. 3 is a diagram illustrating a screen provided to a user, according to an embodiment.
FIG. 4 is a diagram illustrating an operation of processing user information according to an embodiment.
FIGS. 5A and 5B are flowcharts illustrating an operation of a body information modeling module according to an embodiment.
FIG. 6 is a diagram illustrating an operation of an image generation module according to an embodiment.
FIGS. 7A and 7B are diagrams illustrating a plurality of body shape images according to an embodiment.
FIGS. 8A and 8B are diagrams illustrating an interface provided to a user, according to an embodiment.
FIG. 9 is a block diagram illustrating an exercise plan generation module according to an embodiment.
FIG. 10 is a diagram illustrating an operation of an exercise plan generation module according to an embodiment.
FIG. 11 illustrates an example of an interface provided to a user, according to an embodiment.
FIG. 12 is a diagram illustrating a user feedback interface module according to an embodiment.
FIGS. 13A and 13B are diagrams illustrating an exercise plan varying depending on user feedback according to an embodiment.
FIG. 14 is a flowchart illustrating a method of operating an electronic device, according to an embodiment.

### BEST MODE FOR CARRYING OUT THE INVENTION

Hereinafter, the examples will be described in detail with reference to the accompanying drawings. When describing the embodiments with reference to the accompanying drawings, like reference numerals refer to like elements and a repeated description related thereto will be omitted.

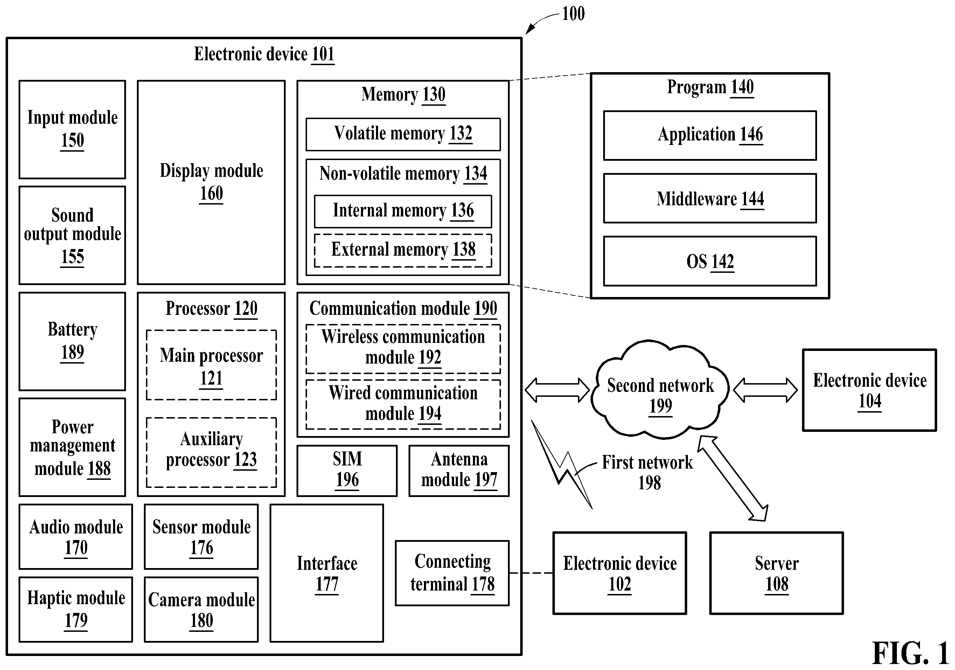

FIG. 1 is a block diagram illustrating an electronic device 101 in a network environment 100 according to various embodiments. Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some examples, at least one (e.g., the connecting terminal 178) of the above components may be omitted from the electronic device 101, or one or more other components may be added to the electronic device 101. In some examples, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may be implemented as circuitry (e.g., processing circuitry), such as a system-on-chip (SoC) or an integrated circuit (IC). The processor 120 may include one or more processors. For example, the processor 120 may include a combination of one or more processors, such as a CPU, a GPU, a microprocessor unit (MPU), an AP, and a CP. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. The AI model may be generated by machine learning. Such learning may be performed by, for example, the electronic device 101 in which an AI model is executed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. According to an embodiment, the memory 130 may include one or more memories. The instructions stored in the memory 130 may be stored in a single memory. The instructions stored in the memory 130 may be distributed and stored in a plurality of memories. According to an embodiment, the instructions stored in the memory 130, when executed individually or collectively by at least one processor (e.g., the main processor 121 and/or the auxiliary processor 123), may cause the electronic device 101 to perform one or more operations. For example, the instructions stored in the memory 130 may be executed by a single processor (e.g., the main processor 121 or an auxiliary processor 123, such as a CP), or by a plurality of processors (e.g., the main processor 121 and the auxiliary processor 123) operating cooperatively.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electrical signal and vice versa. According to an embodiment, the audio module 170 may obtain the sound via the input module 150, or output the sound via an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104, or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more external electronic devices (e.g., the external devices 102 and 104, and the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra-low-latency services using, e.g., distributed computing or MEC. In an embodiment, the external electronic device (e.g., the electronic device 104) may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

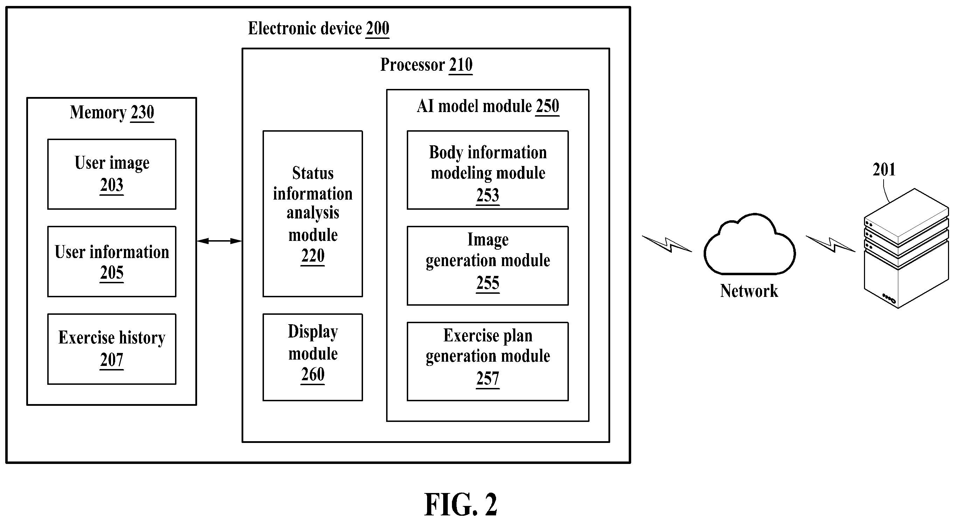

FIG. 2 is a block diagram illustrating an electronic device providing an exercise plan according to an embodiment.

Referring to FIG. 2, according to an embodiment, an electronic device 200 (e.g., the electronic device 101 of FIG. 1) may provide an exercise plan to a user. The exercise plan may include a personalized exercise plan for the user. The exercise plan may be generated from information personalized to the user, such as a personalized target of the user (e.g., a target body shape), information related to the user (e.g., a user image or user information), and an exercise history of the user. The electronic device 200 may use information related to the user (e.g., an exercise history) stored in the electronic device 200 to provide a personalized exercise plan to the user.

According to an embodiment, the electronic device 200 may interoperate with an external server 201 (e.g., a health service provider server) and an AI model to provide an exercise plan. The electronic device 200 may interoperate with an AI model (e.g., an AI model such as an inference model and/or a generative model) generated by an AI model generator executed on the server 201 (e.g., the server 108 of FIG. 1) to generate an exercise plan.

According to an embodiment, the electronic device 200 may be connected to the server 201 via a LAN, a WAN, a value-added network (VAN), a mobile radio communication network, a satellite communication network, or any combination thereof. The electronic device 200 and the server 201 may communicate with each other through a wired communication method or a wireless communication method (e.g., a wireless LAN (WiFi), Bluetooth, Bluetooth low energy, ZigBee, WiFi direct (WFD), ultra-wideband (UWB), infrared data association (IrDA), and near field communication (NFC)).

According to an embodiment, the electronic device 200 may be implemented as at least one of smartphones, tablet personal computers (PCs), mobile phones, speakers (e.g., AI speakers), video phones, e-book readers, desktop PCs, laptop PCs, netbook computers, workstations, servers, personal digital assistants (PDAs), portable multimedia players (PMPs), MP3 players, mobile medical devices, cameras, smart glasses, or wearable devices. The smart glasses may provide a user with virtual reality, augmented reality, or mixed reality via a display.

According to an embodiment, the electronic device 200 may include a processor 210 (e.g., the processor 120 of FIG. 1), memory 230 (e.g., the memory 130 of FIG. 1), and a display module 260 (e.g., the display module 160 of FIG. 1). The processor 210 (e.g., an AP) may execute one or more instructions by accessing the memory 230.

According to an embodiment, the processor 210 may be implemented as circuitry (e.g., processing circuitry), such as a system-on-chip (SoC) or an integrated circuit (IC). The processor 210 may include one or more processors. For example, the processor 210 may include a combination of one or more processors, such as a CPU, a GPU, a microprocessor unit (MPU), an AP, and a CP. The instructions stored in the memory 230 may be executed by a single processor to cause the electronic device 200 to perform and/or control the operations of the electronic device 200 as described with reference to FIGS. 2 to 15. The instructions stored in the memory 230 may be executed by a plurality of processors to cause the electronic device 200 to perform and/or control the operations of the electronic device 200 as described with reference to FIGS. 2 to 15.

According to an embodiment, the memory 230 may include one or more memories. The instructions stored in the memory 230 may be stored in a single memory. The instructions stored in the memory 230 may be distributed and stored in a plurality of memories. The instructions stored in the memory 230 may be executed by the processor 520 to cause the electronic device 200 to perform and/or control the operations of the electronic device 200 as described with reference to FIGS. 2 to 15. The memory 230 may store various types of data used by at least one component (e.g., the processor 210) of the electronic device 200. A status information analysis module 220 and an AI model module 250 may be executed by the processor 210 and may include one or more of program code including instructions that may be stored in the memory 230, an application, an algorithm, a routine, a set of instructions, and an AI training model. In addition, one or more of the status information analysis module 220 and the AI model module 250 may be implemented in hardware and/or in a combination of hardware and software.

According to an embodiment, the electronic device 200 may obtain and store a user image 203, user information 205, and an exercise history 207. The memory 230 may store one or more of the user image 203, the user information 205, and the exercise history 207, and in some embodiments, memory (not shown) separate from the memory 230 included in the electronic device 200 may store one or more of the user image 203, the user information 205, and the exercise history 207.

According to an embodiment, the status information analysis module 220 may preprocess data (e.g., data for generating an exercise plan). For example, the status information analysis module 220 may preprocess the user image 203, the user information 205, and the exercise history 207 (e.g., using preprocessing methods such as vectorization and/or normalization). The status information analysis module 220 may output the preprocessed user image 203, user information 205, and exercise history 207 to the AI model module 250.

According to an embodiment, the user image 203 may include an image retrieved from an external source of the electronic device 200 and an image captured by a camera module (e.g., the camera module 180 of FIG. 1) of the electronic device 200. The user image 203 may include a body image of the user. For example, the user image 203 may include an image showing the entire body of the user.

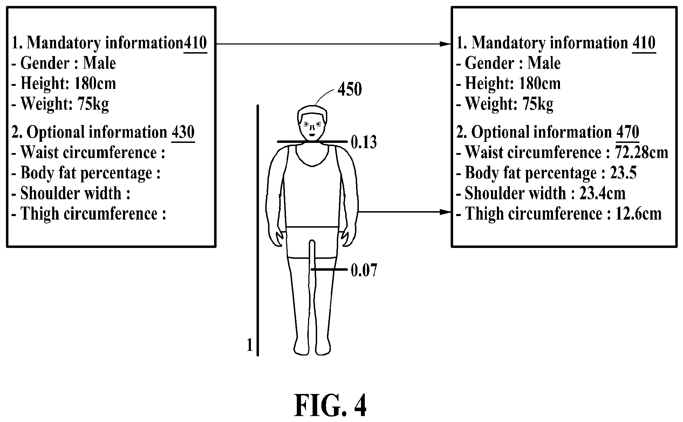

According to an embodiment, the user information 205 may include data associated with the user. For example, the user information 205 may include data associated with the body of the user (e.g., age, gender, height, weight, the size of each body part, body fat percentage, or body change data). The body change data may include data regarding changes over time in the data associated with the body of the user. The user information 205 may include mandatory information and optional information. The mandatory information may include information required to be provided by the user. The mandatory information may include the age, gender, height, and weight of the user. The optional information may include information not required to be provided by the user. The electronic device 200 may estimate, using the status information analysis module 220, a value for an item of the optional information that is not provided by the user. The status information analysis module 220 may derive the optional information from the mandatory information. The operation of the status information analysis module 220 for deriving the optional information from the mandatory information will be described below with reference to FIG. 4. The optional information may include body fat percentage and measurements of each body part (e.g., waist circumference, shoulder width, shoulder prominence, chest circumference, arm circumference, thigh circumference, or calf circumference).

According to an embodiment, the exercise history 207 may include exercise records of the user stored in the electronic device 200. The exercise history 207 may include exercise records of the user, such as exercise frequency (e.g., dates on which exercise is performed or exercise duration), exercise type, exercise intensity, or calories burned. The exercise history 207 may include exercise records input by the user into the electronic device 200 and/or exercise records of the user received by the electronic device 200 from an external electronic device (e.g., the electronic device 102 and/or the electronic device 104 of FIG. 1) (e.g., a wearable device of the user).

According to an embodiment, the AI model module 250 may provide a personalized exercise plan to the user. The AI model module 250 may include a body information modeling module 253, an image generation module 255, and an exercise plan generation module 257.

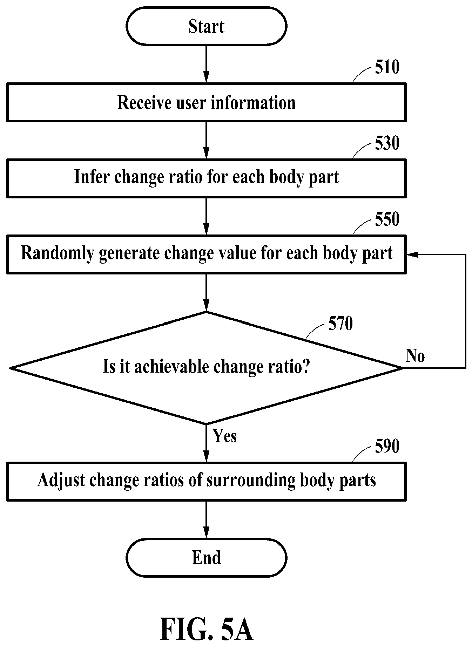

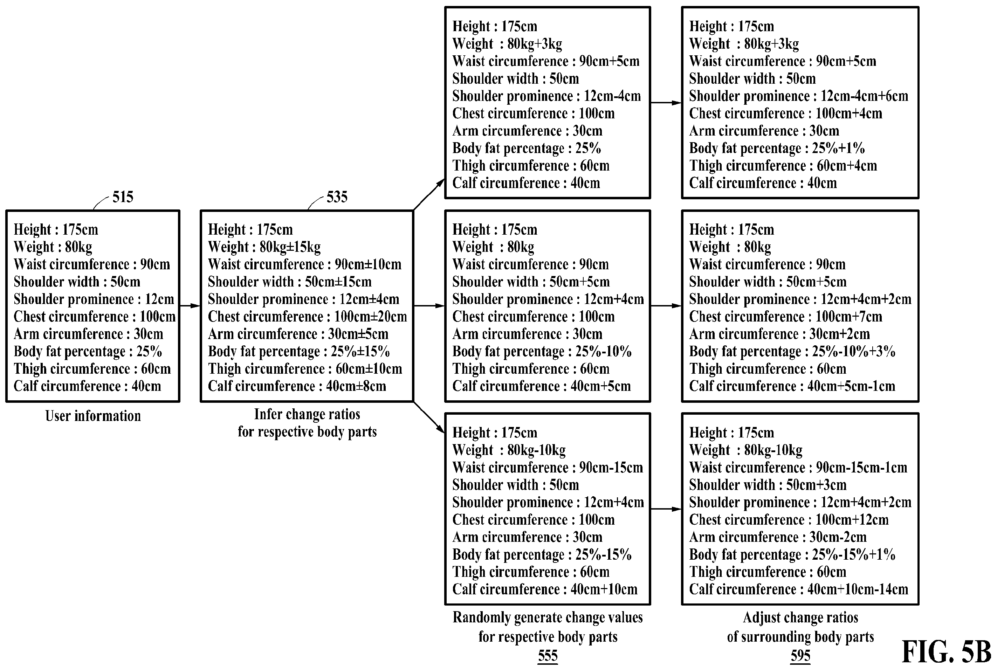

According to an embodiment, the body information modeling module 253 may infer a ratio indicating a possible change for each body part of the user. The body information modeling module 253 may infer a change ratio for each body part of the user, based on the user information 205 (e.g., the body change data of the user). The body information modeling module 253 may infer a change ratio for each body part of the user using trained AI model downloaded from the server 201. For example, the AI model may include an AI model generated and trained through an AI model generator executed on the server 201. The body information modeling module 253 may infer a change ratio for each body part of the user using an inference model (including an inference model such as a Bayesian inference model). The operations of the body information modeling module 253 for inferring a change ratio for each body part of the user will be described in detail below with reference to FIGS. 5A and 5B. The body information modeling module 253 may output a change ratio for each body part of the user to the exercise plan generation module 257.

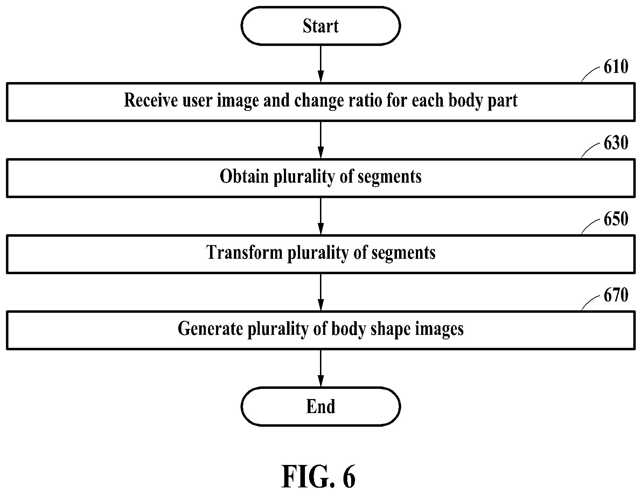

According to an embodiment, the image generation module 255 may generate a plurality of body shape images. The image generation module 255 may generate a plurality of body shape images based on one or more of the user image 203 (e.g., a user image preprocessed by the status information analysis module 220) and the user information 205 (e.g., user information preprocessed by the status information analysis module 220). The image generation module 255 may receive a change ratio for each body part of the user from the body information modeling module 253. The image generation module 255 may obtain a plurality of segments corresponding to respective body parts of the user from the user image 203. The image generation module 255 may generate a plurality of body shape images by transforming the plurality of segments. The image generation module 255 may generate the plurality of body shape images by transforming the plurality of segments based on change ratios for respective body parts corresponding to one or more segments. The operations of the image generation module 255 for generating a plurality of body shape images will be described in detail below with reference to FIGS. 6 to 8B.

According to an embodiment, the electronic device 200 may output a plurality of body shape images using the image generation module 255. The electronic device 200 may output the plurality of body shape images by displaying an interface including the plurality of body shape images on the display module 260. The electronic device 200 may receive a selection input of the user for the plurality of body shape images and determine one or more body shape images from among the plurality of body shape images as a target body shape based on the selection input of the user.

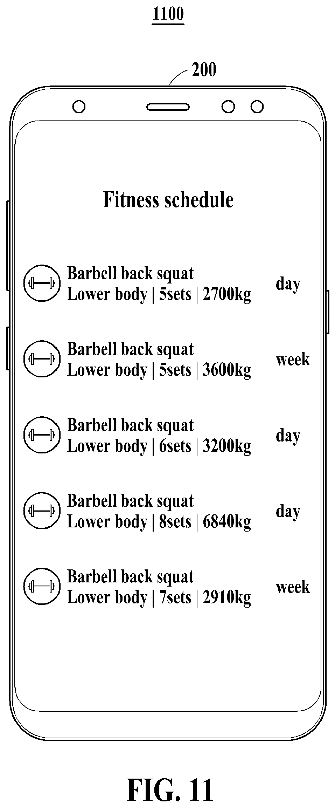

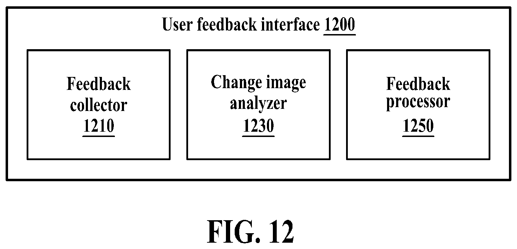

According to an embodiment, the exercise plan generation module 257 may generate an exercise plan. The exercise plan generation module 257 may generate the exercise plan based on one or more of the target body shape and the exercise history (e.g., the exercise history 207) of the user. The exercise plan generation module 257 may generate a personalized exercise plan for the user based on the target body shape corresponding to the selection input of the user and the exercise history 207 of the user. The operations performed by exercise plan generation module 257 will be described in detail below with reference to FIGS. 11 and 12.

According to an embodiment, the exercise plan generation module 257 may provide an exercise plan. The electronic device 200 may provide the exercise plan by displaying an interface including the exercise plan on the display module 260. The electronic device 200 may receive user feedback for the exercise plan through a user feedback interface (e.g., a user feedback interface 1200 of FIG. 12). The electronic device 200 may generate the exercise plan reflecting the user feedback using the exercise plan generation module 257.

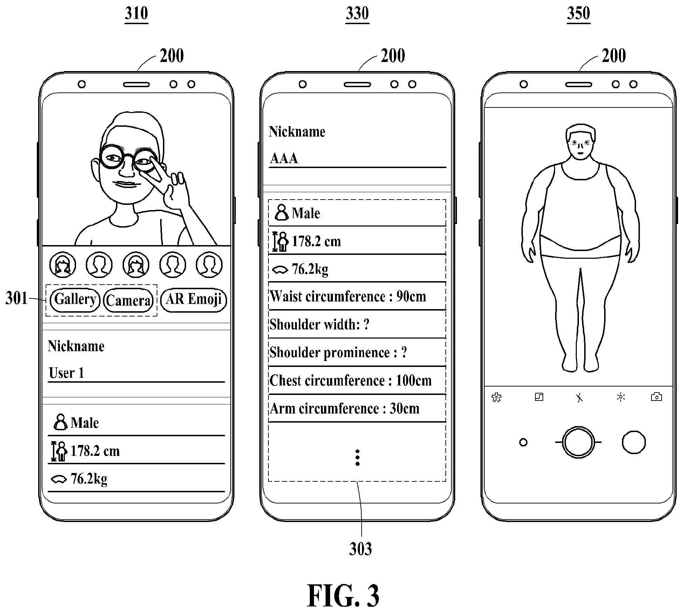

FIG. 3 is a diagram illustrating a screen provided to a user, according to an embodiment.

Referring to FIG. 3, according to an embodiment, the electronic device 200 may display screens 310 to 350 associated with collection of data required to generate an exercise plan. The electronic device 200 may display screens 310 to 350 on a display module (e.g., the display module 260 of FIG. 2).

According to an embodiment, screens 310 and 330 may include a user interface (UI) 303 (e.g., an input window) for receiving the user information 205. Screen 330 may be displayed on the display module 260 in response to a scroll input for scrolling screen 310 from top to bottom or from bottom to top. The UI 303 may be configured to require mandatory information among the user information 205. For example, when the user fails to input one or more items of mandatory information (e.g., age, gender, height, or weight), it may be configured to request the input and not to provide a screen corresponding to a subsequent process. In response to receiving all mandatory information through the UI 303, the electronic device 200 may derive and display optional information. The electronic device 200 may derive the optional information from the mandatory information using the status information analysis module 220.

According to an embodiment, the electronic device 200 may receive the user image 203. Screen 310 may include an icon 301 to allow the user to input the user image 203. The icon 301 may include an icon (e.g., a gallery icon) to allow the user to retrieve an image stored in the electronic device 200 and an icon (e.g., a camera icon) to allow the user to capture a new image through a camera module (e.g., the camera module 180 of FIG. 1).

According to an embodiment, screen 350 shows an example of the user capturing an image. The electronic device 200 may obtain the user image 203 by enabling the user to capture their own image (e.g., a body) through the camera module 180.

FIG. 4 is a diagram illustrating an operation of processing user information according to an embodiment.

Referring to FIG. 4, according to an embodiment, the status information analysis module 220 may preprocess the user information 205. The user information 205 may include mandatory information 410 and optional information 430. A user may fail to input a value for one or more items (e.g., waist circumference, body fat percentage, shoulder width, or thigh circumference) included in the optional information 430. A value for an item not input by the user may be determined to be a null value. The status information analysis module 220 may process the mandatory information 410 to estimate a value corresponding to an item included in the optional information 430. The status information analysis module 220 may estimate a value corresponding to an item (e.g., an item having a null value) (e.g., waist circumference or body fat percentage) included in the optional information 430 using a predefined sample and replace the null value. The predefined sample may include a standard numerical calculation method that has been previously defined. The status information analysis module 220 may estimate a value for an item having a null value among the optional information, based on a user image 450 (e.g., the user image 203). For example, the status information analysis module 220 may estimate a value for an item (e.g., an item having a null value) (e.g., shoulder width or thigh circumference) included in the optional information 430 by applying a value (e.g., 180 cm) corresponding to a height item included in the mandatory information 410 to ratios of respective body parts obtained from the user image 450 and replace the null value. The status information analysis module 220 may output user information including preprocessed optional information 470 to the body information modeling module 253.

FIGS. 5A and 5B are flowcharts illustrating an operation of a body information modeling module according to an embodiment.

FIG. 5A is a flowchart illustrating the operation of the body information modeling module according to an embodiment.

Referring to FIG. 5A, according to an embodiment, operations 510 to 590 may be the operations performed by the electronic device 200 described with reference to FIG. 2 using the body information modeling module 253.

According to an embodiment, the server 201 may include an AI model generator (not shown). The AI model generator may generate an AI model by repeatedly training a time series model (e.g., a recurrent neural network (RNN), a long short-term memory (LSTM), a gated recurrent unit (GRU), or a transformer) based on body change data of a user. The AI model may include an inference model. The AI model generator may collect body change data over time (e.g., days) and preprocess data (e.g., elapsed days or user body data) through data embedding. The AI model generator may generate an inference model by repeatedly training a time series model using the preprocessed data.

According to an embodiment, in operation 510, the body information modeling module 253 may receive user information (e.g., user information preprocessed by the status information analysis module 220).

According to an embodiment, in operation 530, the body information modeling module 253 may infer a change ratio for each body part. The body information modeling module 253 may infer a change ratio for each body part of the user based on the user information (e.g., user information such as age, gender, height, or race). For example, the body information modeling module 253 may infer a change ratio for each body part based on average body information (e.g., body information such as average weight, body shape, skeletal structure, muscle mass, or body proportion) according to the age, gender, height, or race of the user. The body information modeling module 253 may infer a change ratio for each body part of the user based on the body change data of the user. The body information modeling module 253 may infer a change ratio for each body part of the user using an inference model. The AI model generator may collect body change data over time (e.g., day 1 to day n) and generate vector data suitable for AI training through data embedding. The vector data may include information indicative of a body change of the user. The AI model generator may train a time series model (e.g., an RNN, an LSTM, a GRU, or a transformer) using the generated vector data. The AI model generator may generate an inference model (including an inference model such as a Bayesian inference model) by repeatedly training a time series model. The inference model may output a change ratio for each body part of the user after a predetermined period (e.g., m days) has elapsed since receiving the user image 203, using the user image 203 and the predetermined period as input. The AI model generator may generate an inference model that reflects the user's latest body change trends by retraining the time series model at n-day intervals (e.g., n is a natural number greater than or equal to 1). For example, the AI model generator may reflect changes in the user's environment and trends in the user's body change data in the inference model by retraining the time series model at n-day intervals (e.g., n is a natural number greater than or equal to 1). The body information modeling module 253 may infer a change ratio for each body part after the predetermined period (e.g., m days) using the inference model generated by the AI model generator.

According to an embodiment, in operation 550, the body information modeling module 253 may randomly generate a change value for each body part. The body information modeling module 253 may generate a plurality of body change scenarios in which change values are randomly assigned to respective body parts. The body information modeling module 253 may randomly generate change values for respective body parts of the user based on change ratios for respective body parts inferred in operation 530. For example, the body information modeling module 253 may randomly generate a change value within a range of change ratios, for a predetermined period (e.g., after n days), obtained through an inference model. The change values for respective body parts may include values within the range of change ratios for respective body parts. The body information modeling module 253 may randomly select a body part and generate a change value for the selected body part.

According to an embodiment, in operation 570, the body information modeling module 253 may determine whether change values randomly assigned to data (e.g., a plurality of body change scenarios) fall within an achievable change ratio. The body information modeling module 253 may determine whether the change values randomly assigned to the data (e.g., the plurality of body change scenarios) fall within the achievable change ratio and are achievable by the user. For example, the body information modeling module 253 may determine whether the plurality of body change scenarios fall within the achievable change ratio, thereby determining whether the scenarios are likely to include unrealistic body proportions and/or excessive body distortions. The achievable change ratio may be determined based on an embedding vector generated from the user's prior body change data. The body information modeling module 253 may determine, using an inference model, whether the data reflects the achievable change ratio. For example, the body information modeling module 253 may load an embedding layer of the inference model, embed data (e.g., the plurality of body change scenarios) including randomly assigned change values into a vector space, and calculate a similarity distance between the embedded data and prior vector data. The body information modeling module 253 may determine, based on vector data including information indicative of the user's body change, whether the data including randomly assigned change values fall within the achievable change ratio. When the calculated similarity distance exceeds a predetermined threshold, the body information modeling module 253 may determine that the data does not fall within the achievable change ratio and perform operation 550 again. In response to determining that the data falls within the achievable change ratio, the body information modeling module 253 may perform operation 590.

According to an embodiment, in operation 590, the body information modeling module 253 may adjust ratios of surrounding body parts based on a body part. For example, when chest circumference is increased, the body information modeling module 253 may adjust circumferences of surrounding body parts, such as shoulders and/or arms. The body information modeling module 253 may generate a plurality of body shape images having anatomically balanced proportions by adjusting ratios of surrounding body parts.

FIG. 5B illustrates an example of results of operations performed by the body information modeling module 253 described with reference to FIG. 5A.

Referring to FIG. 5B, according to an embodiment, the electronic device 200 may infer, using the body information modeling module 253, change ratios 535 for respective body parts based on user information 515 (e.g., the user information 205). The electronic device 200 may generate a plurality of body change scenarios 555 by randomly generating change values for respective body parts using the body information modeling module 253. The electronic device 200 may, using the body information modeling module 253, determine whether the generated plurality of body change scenarios 555 fall within an achievable change ratio and generate a final scenario 595 by adjusting change ratios of surrounding body parts.

FIG. 6 is a diagram illustrating an operation of an image generation module according to an embodiment.

Referring to FIG. 6, according to an embodiment, operations 610 to 670 may be the operations of the electronic device 200 described with reference to FIG. 2 for generating a plurality of body shape images using an image generation module (e.g., the image generation module 255). The electronic device 200 may provide, as a goal for health and/or exercise, an image generated based on a user's image to visualize the goal and promote the user's interest in exercise.

According to an embodiment, the image generation module 255 may output a plurality of body shape images. The plurality of body shape images may be generated by transforming a plurality of segments obtained from the user image 203 (e.g., user image preprocessed by the status information analysis module 220). The image generation module 255 may output a plurality of body shape images based on the user image 203, in which segments corresponding to respective body parts are differently transformed. The image generation module 255 may output the plurality of body shape images to provide a visualized goal for health and/or exercise to the user. The image generation module 255 may output the plurality of body shape images to provide a personalized exercise plan based on an exercise goal reflecting the user's personal preferences.

According to an embodiment, the image generation module 255 may output a plurality of body shape images using an image of another person. The electronic device 200 may output the plurality of body shape images based on the user image with reference to received body images of other people (e.g., celebrities or influencers).

According to an embodiment, in operation 610, the image generation module 255 may receive the user image 203 and a change ratio for each body part. The image generation module 255 may receive the user image 203 and a change ratio for each body part to generate a plurality of body shape images. The image generation module 255 may receive a change ratio for each body part from the body information modeling module 253.

According to an embodiment, in operation 630, the image generation module 255 may obtain a plurality of segments. The image generation module 255 may obtain the plurality of segments corresponding to respective body parts of the user from the user image 203. The image generation module 255 may perform segmentation on the user image 203 using deep learning techniques (e.g., computer vision techniques). The image generation module 255 may perform segmentation on the user image 203 to obtain the plurality of segments corresponding to respective body parts (e.g., arms, shoulders, chest, abdomen, thighs, or calves) of the user.

According to an embodiment, in operation 650, the image generation module 255 may transform the plurality of segments. The image generation module 255 may transform the plurality of segments based on change ratios for respective body parts.

According to an embodiment, in operation 670, the image generation module 255 may generate the plurality of body shape images. The image generation module 255 may generate the plurality of body shape images using a generative model (e.g., a stable diffusion model). When an image of another person is used for body shape image generation, the image generation module 255 may analyze the body shape of the other person and generate a body shape image in which the plurality of segments corresponding to the user image 203 are transformed to match the body shape of the other person.

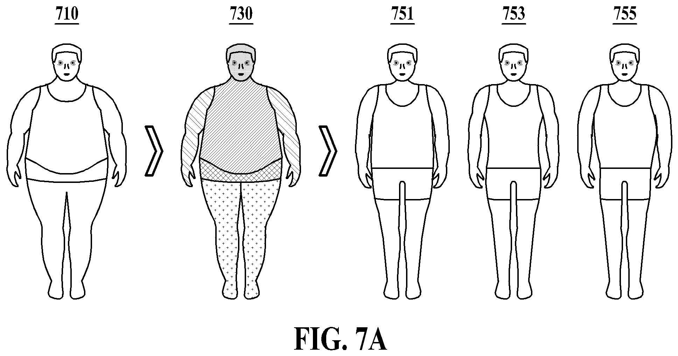

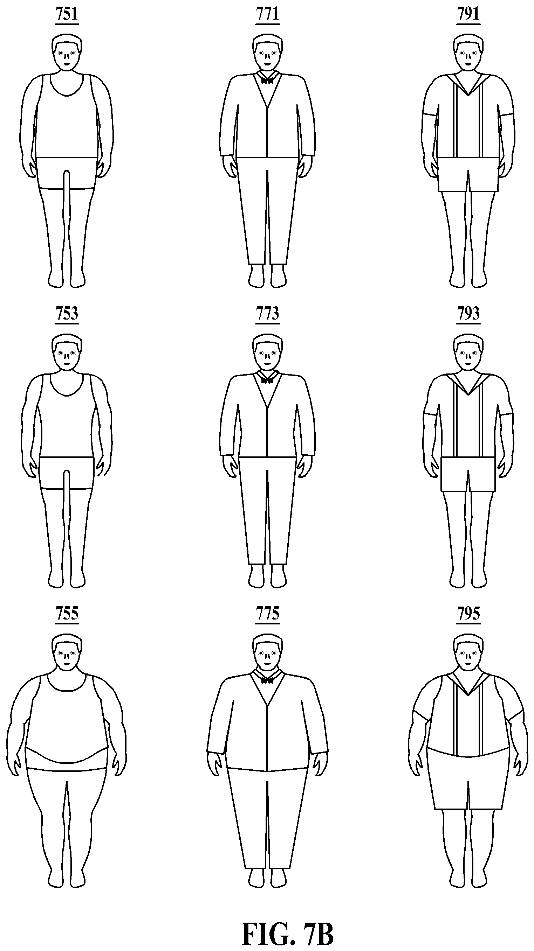

FIGS. 7A and 7B are diagrams illustrating a plurality of body shape images according to an embodiment.

FIG. 7A is a diagram illustrating the plurality of body shape images according to an embodiment.

Referring to FIG. 7A, the plurality of body shape images (e.g., body shape images 751 to 753) may represent examples of body shape images generated by the image generation module 255.

According to an embodiment, the image generation module 255 may perform segmentation on a user image 710 (e.g., the user image 203 of FIG. 2). The image generation module 255 may perform segmentation on the user image 710 to obtain a plurality of segments. An image 730 may represent the result of segmentation performed on the user image 710.

According to an embodiment, the image generation module 255 may transform the plurality of segments. Body shape images 751 to 755 may include images generated by transforming the plurality of segments obtained from the user image 710 based on change ratios corresponding to respective body parts. For example, the body shape image 755 may be generated from the user image 710 by transforming the plurality of segments corresponding to the upper body (e.g., shoulders, arms, or chest) among the body parts.

FIG. 7B illustrates an example of a plurality of body shape images generated using outfit information.

Referring to FIG. 7B, according to an embodiment, the image generation module 255 may use outfit information to generate the plurality of body shape images. The outfit information may include information obtained from a user image stored in the electronic device 200 and information obtained from an external source of the electronic device 200. The image generation module 255 may output the plurality of body shape images reflecting the outfit information. For example, body shape images 771 to 775 may represent examples of images generated by applying a suit image to the body shape images 751 to 755, respectively. The electronic device 200 may output the plurality of body shape images reflecting the outfit information to provide a specific exercise goal to the user.

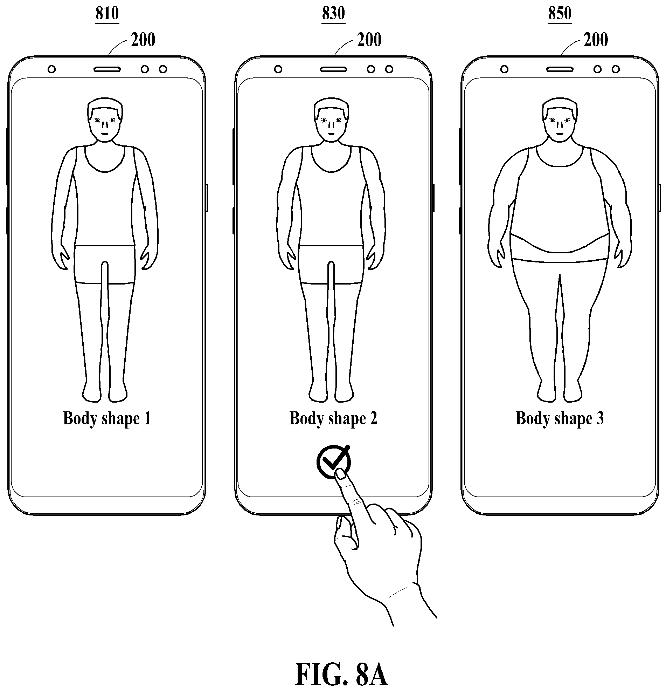

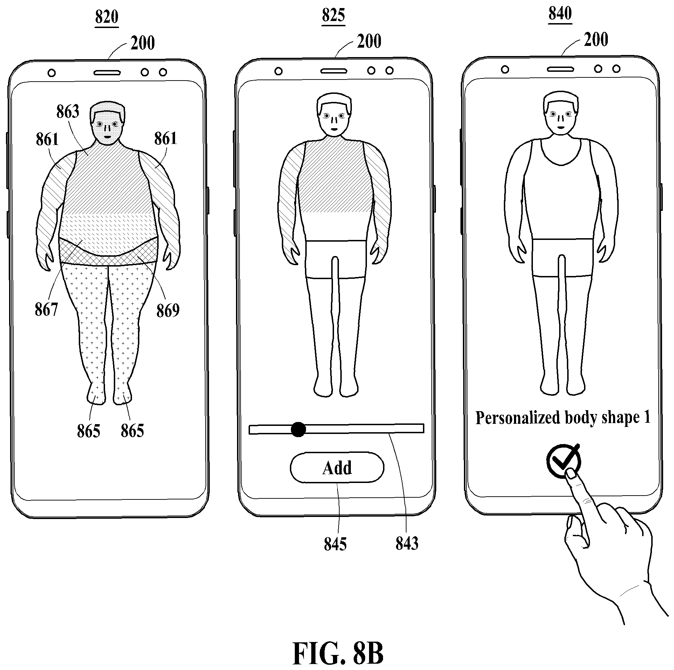

FIGS. 8A and 8B are diagrams illustrating an interface provided to a user, according to an embodiment.

FIG. 8A illustrates an example of the interface provided to the user, according to an embodiment.

Referring to FIG. 8A, according to an embodiment, the electronic device 200 may display screens 810 to 850 including a plurality of body shape images. The electronic device 200 may display screens 810 to 850 on a display module (e.g., the display module 260 of FIG. 2). Screen 810 to 850 may be switched in response to scroll input or slide input. For example, the electronic device 200 may display screen 830 or screen 850 in response to the user's scroll input or slide input on screen 810. The user may select one or more body shape images among body shape images (e.g., body shape images 1 to 3) corresponding to screens 810 to 850, respectively. The electronic device 200 may determine one or more body shape images from among the plurality of body shape images as a target body shape based on user selection input. The electronic device 200 may determine the target body shape to provide an exercise plan. For example, the electronic device 200 may, in response to user selection input for the body shape image 2 corresponding to screen 830, determine the body shape image 2 as the target body shape.

FIG. 8B illustrates an example of the interface provided to the user, according to an embodiment.

Referring to FIG. 8B, according to an embodiment, the electronic device 200 may reflect the user's settings, using the image generation module 255, to generate a plurality of body shape images.

According to an embodiment, the electronic device 200 may provide a UI on screen 820 such that the user may select a segment to be transformed. The electronic device 200 may display on screen 820 an image (e.g., the image 730) that has been segmented from a user image (e.g., the user image 710 or the user image 203). Screen 820 may include a UI for receiving user selection input for a plurality of segments obtained from the user image. Upon receiving user input for one or more of segments 861 to 869, the electronic device 200 may set one or more segments corresponding to user selection input as body parts requiring improvement. For example, the electronic device 200 may determine the segments 861 and 863 as the body parts requiring improvement in response to user selection input for the segment 861 corresponding to an arm and the segment 863 corresponding to the chest. The electronic device 200 may determine the one or more segments corresponding to the user selection input as the body parts requiring improvement and transform the segments corresponding to the body parts requiring improvement.

According to an embodiment, the electronic device 200 may receive, from the user, change values for one or more segments corresponding to user selection input on screen 825. Screen 825 may include a UI 843 for receiving, from the user, change values to transform one or more segments (e.g., the segment 861 or the segment 863) corresponding to the user selection input. The UI 843 may be implemented to allow the user to select a change value within a range of change ratios of respective body parts corresponding to the segments to be transformed. For example, since the segment 861 corresponding to the user selection input corresponds to an arm, the UI 843 may provide a change value within a range of a change ratio for an arm.

According to an embodiment, the UI 843 may be implemented as a slide bar or an input window for receiving text input from the user. When the UI 843 is implemented as an input window for receiving text input, a change value may be input within a range of a change ratio of a body part requiring improvement. Once setting a segment corresponding to a body part requiring improvement and a desired degree of improvement, the user may generate a personalized target body shape image through an input to an additional icon 845. The electronic device 200 may display screen 840 in response to the input to the additional icon 845. Screen 840 may include a body shape image generated by transforming the one or more segments corresponding to the user selection input according to the change value set by the user.

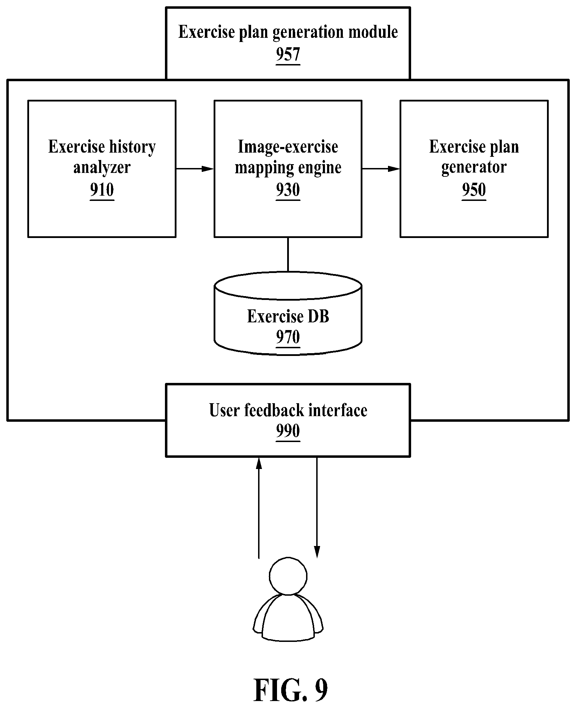

FIG. 9 is a block diagram illustrating an exercise plan generation module according to an embodiment.

Referring to FIG. 9, the exercise plan generation module 257 may generate an exercise plan.

According to an embodiment, the exercise plan generation module 257 may include an exercise history analyzer 910, an image-exercise mapping engine 930, an exercise plan generator 950, an exercise database (DB) 970, and a user feedback interface 990.

According to an embodiment, the exercise DB 970 may include exercise data. The exercise DB 970 may include data indicating exercise types and a degree to which each exercise type contributes to improving each body part, the degree being represented by a numerical value (e.g., a value between 0 and 1). For example, the exercise DB 970 may include, as shown in Table 1, the data indicating exercise types and the degree to which each exercise type contributes to improving each body part, the degree being represented by a numerical value (e.g., a value between 0 and 1).

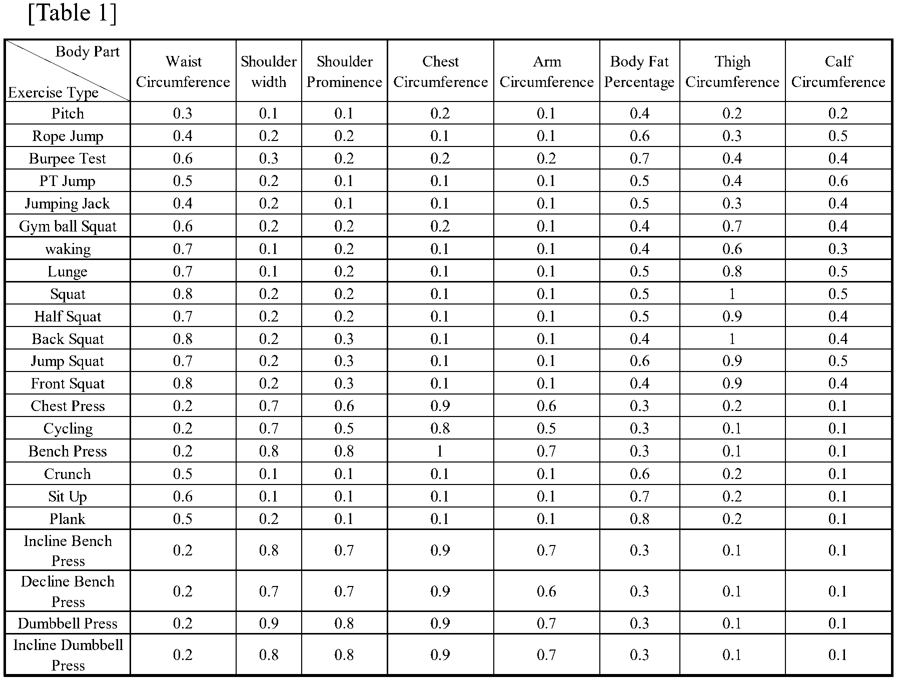

According to an embodiment, the exercise history analyzer 910 may analyze an exercise history (e.g., the exercise history 207 of FIG. 2) to determine an exercise type, exercise intensity, and exercise frequency preferred by a user. The exercise history analyzer 910 may generate an exercise plan using the determined exercise type, exercise intensity, and exercise frequency to provide an exercise plan having a high likelihood of achievement by the user.

According to an embodiment, the image-exercise mapping engine 930 may obtain a body part requiring improvement and exercise data (e.g., an exercise type or an exercise amount). The image-exercise mapping engine 930 may determine a body part requiring improvement based on one or more of a user image (e.g., the user image 203 or the user image 710), user information (e.g., the user information 205), and a target body shape (e.g., one or more body shape images corresponding to user selection input). For example, the image-exercise mapping engine 930 may determine a body part requiring improvement by comparing the user image 203 and the user information 205 with the target body shape. The image-exercise mapping engine 930 may obtain, from the exercise DB 970, exercise data helpful for a body part requiring improvement. For example, the image-exercise mapping engine 930 may obtain the exercise data helpful for a body part requiring improvement based on exercise types and data included in the exercise DB 970, the data indicating a degree to which each exercise type contributes to improving each body part, the degree being represented by a numerical value (e.g., a value between 0 and 1).

According to an embodiment, the image-exercise mapping engine 930 may generate priority for the exercise data. The image-exercise mapping engine 930 may provide an exercise plan having a high likelihood of achievement by the user by assigning the priority based on one or more of the user information 205 and the exercise history 207. The image-exercise mapping engine 930 may generate priority for the exercise data. The image-exercise mapping engine 930 may generate priority based on the exercise history 207. For example, the image-exercise mapping engine 930 may generate priority for exercises included in the exercise data in order of the exercise history of the user, the user's exercise amount per unit time, and a user-designated exercise. The criteria used by the image-exercise mapping engine 930 to generate priority are not limited to the foregoing examples. The image-exercise mapping engine 930 may transmit the generated priority to the exercise plan generator 950.

According to an embodiment, the exercise plan generator 950 may generate an exercise plan. The exercise plan generator 950 may generate an exercise plan based on the generated priority by the image-exercise mapping engine 930.

According to an embodiment, the user feedback interface 990 may collect feedback from the user. The user feedback interface 990 may provide an exercise plan having a high level of user satisfaction based on the collected feedback. The feedback may include the user's opinion regarding the difficulty, effectiveness, and satisfaction of the exercise plan.

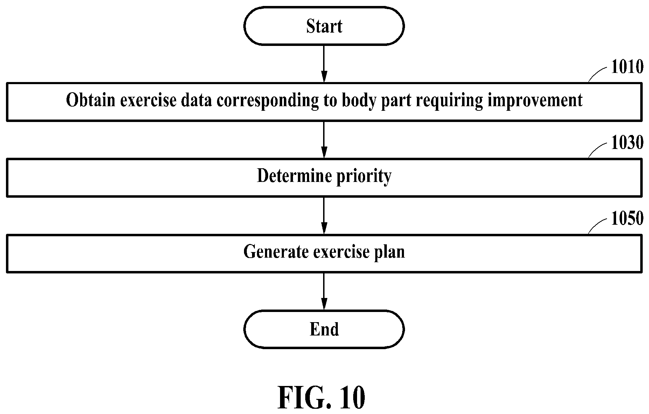

FIG. 10 is a diagram illustrating an operation of an exercise plan generation module according to an embodiment.

Referring to FIG. 10, according to an embodiment, operations 1010 to 1050 may be the operations performed by an exercise plan generation module 957 to generate an exercise plan.

According to an embodiment, in operation 1010, the exercise plan generation module 957 may obtain exercise data corresponding to a body part requiring improvement. The electronic device 200 may obtain a body part requiring improvement and exercise data corresponding to the body part requiring improvement using the image-exercise mapping engine 930.

According to an embodiment, in operation 1030, the exercise plan generation module 957 may generate priority for exercise data. The exercise plan generation engine 957 may generate priority based on the exercise history 207.

According to an embodiment, in operation 1050, the exercise plan generation module 957 may generate an exercise plan. The electronic device 200 may generate an exercise plan based on the priority using the exercise plan generator 950.

FIG. 11 illustrates an example of an interface provided to a user, according to an embodiment.

Referring to FIG. 11, according to an embodiment, the electronic device 200 may display screen 1100 providing an exercise plan. The electronic device 200 may display screen 1100 on a display module (e.g., the display module 260 of FIG. 2). The exercise plan may include one or more of an exercise type, exercise frequency, and exercise intensity. The exercise type may include one or more of an exercise name (e.g., a barbell back squat or a hip abduction machine) and a target body part (e.g., the lower body, shoulders, or chest).

FIG. 12 is a diagram illustrating a user feedback interface module according to an embodiment.

Referring to FIG. 12, according to an embodiment, a user feedback interface 1200 (e.g., the user feedback interface 990) may collect feedback from a user for an exercise plan. The user feedback interface 1200 may provide an exercise plan having a high level of user satisfaction using the feedback from the user.

According to an embodiment, the user feedback interface 1200 may include a feedback collector 1210, a change image analyzer 1230, and a feedback processor 1250.

According to an embodiment, the feedback collector 1210 may collect feedback from the user for an exercise plan. The feedback from the user may include the user's opinion regarding whether the exercise plan has been performed, the difficulty, effectiveness, and satisfaction of the exercise plan. The feedback collector 1210 may be implemented through methods such as evaluation scales, questionnaires, or free-form text input to collect feedback from the user.

According to an embodiment, the change image analyzer 1230 may collect a user image after exercise. The change image analyzer 1230 may determine whether the exercise plan has affected the user's body based on the user image after exercise. The change image analyzer 1230 may analyze the effects of the exercise plan on the user's body using image analysis and machine learning techniques.

According to an embodiment, the feedback processor 1250 may modify the exercise plan based on the feedback. The feedback processor 1250 may modify the exercise plan based on one or more of the user feedback received from the feedback collector 1210 and the user image after exercise received from the change image analyzer 1230. For example, the feedback processor 1250 may modify the exercise plan when the user satisfaction and effectiveness of the exercise plan is determined to be low.

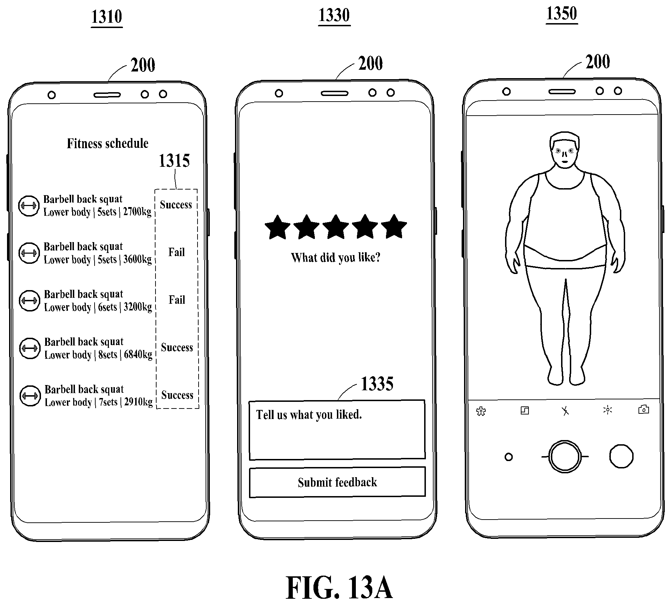

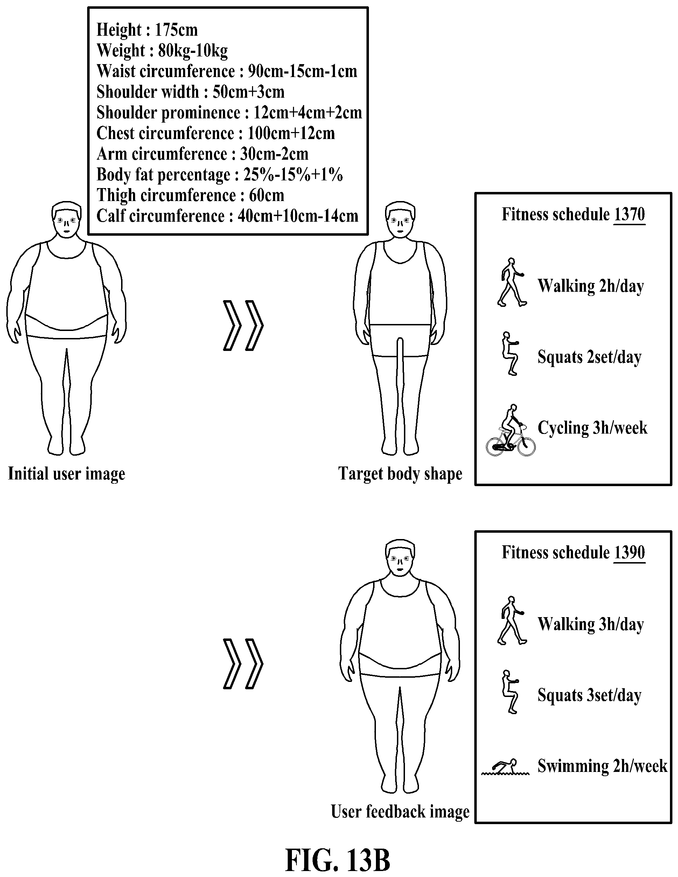

FIGS. 13A and 13B are diagrams illustrating an exercise plan varying depending on user feedback according to an embodiment.

Referring to FIG. 13A, according to an embodiment, the electronic device 200 may display screens 1310 to 1350 associated with collection of user feedback. The electronic device 200 may display screens 1310 to 1350 on a display module (e.g., the display module 260 of FIG. 2).

According to an embodiment, screen 1310 may include a UI (e.g., a selection window 1315) for receiving an input indicating whether the exercise plan has been performed. Screen 1330 may include a UI (e.g., a rating interface) for evaluating the exercise plan and a UI (e.g., an input window 1335) for receiving free-form text feedback input. Screens 1310 and 1330 are only examples of screens that may be displayed on the electronic device 200 by the feedback collector 1210 to collect user feedback, and embodiments are not limited thereto.

According to an embodiment, screen 1350 may be an example of a screen for the change image analyzer 1230 to collect a user image after exercise.

FIG. 13B illustrates an example of a modified exercise plan according to an embodiment.

Referring to FIG. 13B, according to an embodiment, the feedback processor 1250 may generate the modified exercise plan (e.g., an exercise plan 1390) based on user feedback. The user feedback may include a user feedback image (e.g., a user image after exercise through screen 1350 of FIG. 13A), user feedback whether the exercise has been performed (e.g., user feedback whether the exercise has been performed collected through screen 1310 of FIG. 13A), and a user evaluation (e.g., an evaluation collected through screen 1330 of FIG. 13A). The feedback processor 1250 may modify the exercise plan (e.g., the exercise plan 1370) based on the user feedback. For example, the feedback processor 1250 may modify at least one of an exercise type, exercise frequency, exercise duration, and exercise intensity, based on the user feedback for the exercise plan 1370. The feedback processor 1250 may modify an overall duration of the exercise plan based on the user feedback. For example, the feedback processor 1250 may modify an exercise plan on an n-week basis (e.g., a one-week basis) to an exercise plan on a longer-term or shorter-term basis than the n-week basis, based on the user feedback (e.g., whether the user has been agreed). The feedback processor 1250 may provide visual notification and/or auditory notification to prompt the user to perform the exercise plan based on the user feedback. The feedback processor 1250 may provide visual notification and/or auditory notification to prompt the user to perform the exercise plan such that the user may reach a target body shape. For example, when determining, based on the user feedback, that the user is unlikely to reach the target body shape within a predetermined period, the feedback processor 1250 may increase the frequency of providing visual notification and/or auditory notification to prompt performance of the exercise plan. The electronic device 200 may provide the modified exercise plan 1390 through the feedback processor 1250.

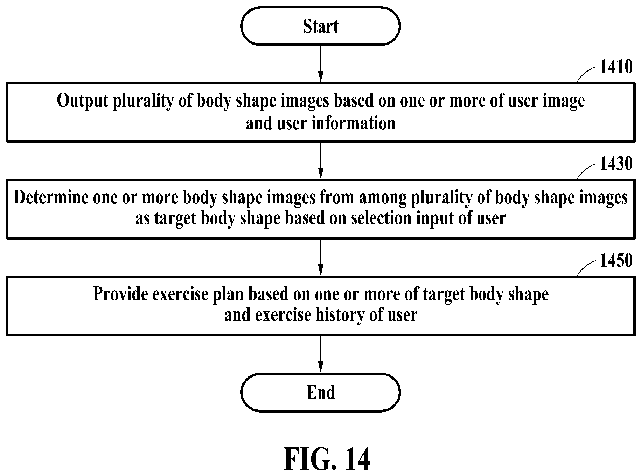

FIG. 14 is a flowchart illustrating a method of operating an electronic device, according to an embodiment.

Operations 1410 to 1450 may be performed sequentially but not necessarily. For example, the order of operations 1410 to 1450 may be changed, and at least two operations may be performed in parallel.

According to an embodiment, operations 1410 to 1450 may be understood as being performed by a processor (e.g., the processor 220 of FIG. 2) of an electronic device (e.g., the electronic device 200 of FIG. 2).

In operation 1410, according to an embodiment, the electronic device may output a plurality of body shape images based on one or more of a user image and user information.

In operation 1430, according to an embodiment, the electronic device may determine one or more body shape images from among the plurality of body shape images as a target body shape based on a selection input of a user.

In operation 1450, according to an embodiment, the electronic device may provide an exercise plan generated based on the target body shape and an exercise history of the user.

According to an embodiment, an electronic device (e.g., the electronic device 101 of FIG. 1 or the electronic device 200 of FIG. 2) may include at least one processor (e.g., the processor 120 of FIG. 1 or the processor 210 of FIG. 2) and memory (e.g., the memory 130 of FIG. 1 or the memory 230 of FIG. 2) storing instructions. The instructions, when executed individually or collectively by the at least one processor may cause the electronic device to output a plurality of body shape images based on one or more of a user image (e.g., the user image 203 of FIG. 2, the user image 450 of FIG. 4, or the user image 710 of FIG. 7A) and user information (e.g., the user information 205 of FIG. 2).

The instructions, when executed individually or collectively by the at least one processor may cause the electronic device to determine, based on a selection input of a user, one or more body shape images from among the plurality of body shape images as a target body shape.

The instructions, when executed individually or collectively by the at least one processor may cause the electronic device to provide an exercise plan based on one or more of the target body shape and an exercise history (e.g., the exercise history 207 of FIG. 2) of the user.

According to an embodiment, the instructions, when executed individually or collectively by the at least one processor may cause the electronic device to obtain a plurality of segments corresponding to body parts of the user from the user image.

The instructions, when executed individually or collectively by the at least one processor may cause the electronic device to generate the plurality of body shape images by transforming the plurality of segments.

According to an embodiment, the user information may include body change data of the user.

According to an embodiment, the instructions, when executed individually or collectively by the at least one processor may cause the electronic device to infer, based on the body change data of the user, change ratios for respective body parts of the user.

The instructions, when executed individually or collectively by the at least one processor may cause the electronic device to transform the plurality of segments based on the change ratios.

According to an embodiment, the instructions, when executed individually or collectively by the at least one processor may cause the electronic device to determine one or more segments corresponding to a selection input of the user from among the plurality of segments.

The instructions, when executed individually or collectively by the at least one processor may cause the electronic device to output an image in which the one or more segments corresponding to the selection input of the user are transformed based on the change ratio.

According to an embodiment, the instructions, when executed individually or collectively by the at least one processor may cause the electronic device to transform the plurality of segments based on a change ratio for each body part corresponding to each of the one or more segments.

According to an embodiment, the instructions, when executed individually or collectively by the at least one processor may cause the electronic device to determine a body part requiring improvement from among body parts of the user, based on one or more of the user image, the user information, and the target body shape.

The instructions, when executed individually or collectively by the at least one processor may cause the electronic device to obtain exercise data corresponding to the body part requiring improvement.

The instructions, when executed individually or collectively by the at least one processor may cause the electronic device to provide the exercise plan based on one or more of the exercise data and the exercise history of the user.

According to an embodiment, when a selection input of the user is received with respect to the plurality of segments, the body part requiring improvement includes one or more segments corresponding to the selection input of the user.

According to an embodiment, the instructions, when executed individually or collectively by the at least one processor may cause the electronic device to determine a priority of the exercise data, based on one or more of the user information and the exercise history of the user.

The instructions, when executed individually or collectively by the at least one processor may cause the electronic device to generate the exercise plan based on the priority.

According to an embodiment, the exercise plan may include one or more of exercise type, exercise frequency, and exercise intensity.

According to an embodiment, the exercise plan may be generated based on the body part requiring improvement.

According to an embodiment, a method of operating an electronic device (e.g., the electronic device 101 of FIG. 1 or the electronic device 200 of FIG. 2) may include outputting a plurality of body shape images based on one or more of a user image (e.g., the user image 203 of FIG. 2, the user image 450 of FIG. 4, or the user image 710 of FIG. 7A) and user information (e.g., the user information 205 of FIG. 2).

The method may include determining, based on a selection input of a user, one or more body shape images from among the plurality of body shape images as a target body shape.

The method may include providing an exercise plan based on one or more of the target body shape and an exercise history (e.g., the exercise history 207 of FIG. 2) of the user.

According to an embodiment, the outputting of the plurality of body shape images may include obtaining a plurality of segments corresponding to body parts of the user from the user image.

The outputting of the plurality of body shape images may include generating the plurality of body shape images by transforming the plurality of segments.

According to an embodiment, the user information may include body change data of the user.

According to an embodiment, the method may include inferring, based on the body change data of the user, change ratios for respective body parts of the user.

The method may include transforming the plurality of segments based on the change ratios.

According to an embodiment, the method may include determining one or more segments corresponding to a selection input of the user from among the plurality of segments.

The method may include outputting an image in which the one or more segments corresponding to the selection input of the user are transformed based on the change ratio.

According to an embodiment, the method may include transforming the plurality of segments based on a change ratio for each body part corresponding to each of the one or more segments.

According to an embodiment, the method may include determining a body part requiring improvement from among body parts of the user, based on one or more of the user image, the user information, and the target body shape.

The method may include obtaining exercise data corresponding to the body part requiring improvement.

The method may include providing the exercise plan based on one or more of the exercise data and the exercise history of the user.

According to an embodiment, when a selection input of the user is received with respect to the plurality of segments, the body part requiring improvement includes one or more segments corresponding to the selection input of the user.

According to an embodiment, the method may include determining a priority of the exercise data, based on one or more of the user information and the exercise history of the user.

The method may include generating the exercise plan based on the priority.

According to an embodiment, the exercise plan may include one or more of exercise type, exercise frequency, and exercise intensity. According to an embodiment, the exercise plan may be generated based on the body part requiring improvement.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be implemented in the form of an application-specific integrated circuit (ASIC).

Various embodiments as set forth herein may be implemented as software (e.g., the program 1740) including one or more instructions that are stored in a storage medium (e.g., the internal memory 1736 or the external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to an embodiment, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
at least one processor (120; 210); and
memory (130; 230) storing instructions,
wherein the instructions, when executed individually or collectively by the at least one processor (120; 210), cause the electronic device (101; 200) to:
output a plurality of body shape images based on one or more of a user image (203; 450; 710) and user information (205);
determine, based on a selection input of a user, one or more body shape images from among the plurality of body shape images as a target body shape; and
provide an exercise plan based on one or more of the target body shape
and an exercise history (207) of the user.

2. The electronic device (101; 200) of claim 1, wherein the instructions, when executed individually or collectively by the at least one processor (120; 210), cause the electronic device (101; 200) to:
obtain a plurality of segments corresponding to body parts of the user from the user image (203; 450; 710); and
generate the plurality of body shape images by transforming the plurality of segments.

3. The electronic device (101; 200) of any one of claims 1 and 2, wherein the user information (205) includes body change data of the user.

4. The electronic device (101; 200) of any one of claims 1 to 3, wherein the instructions, when executed individually or collectively by the at least one processor (120; 210), cause the electronic device (101; 200) to:
infer, based on the body change data of the user, change ratios for respective body parts of the user; and
transform the plurality of segments based on the change ratios.

5. The electronic device (101; 200) of any one of claims 1 to 4, wherein the instructions, when executed individually or collectively by the at least one processor (120; 210), cause the electronic device (101; 200) to:
determine one or more segments corresponding to a selection input of the user from among the plurality of segments; and
output an image in which the one or more segments corresponding to the selection input of the user are transformed based on the change ratio.

6. The electronic device (101; 200) of any one of claims 1 to 5, wherein the instructions, when executed individually or collectively by the at least one processor (120; 210), cause the electronic device (101; 200) to:
transform the plurality of segments based on a change ratio for each body part corresponding to each of the one or more segments.

7. The electronic device (101; 200) of any one of claims 1 to 6, wherein the instructions, when executed individually or collectively by the at least one processor (120; 210), cause the electronic device (101; 200) to:
determine a body part requiring improvement from among body parts of the user, based on one or more of the user image (203; 450; 710), the user information (205), and the target body shape;
obtain exercise data corresponding to the body part requiring improvement; and
provide the exercise plan based on one or more of the exercise data and the exercise history(207) of the user.

8. The electronic device (101; 200) of any one of claims 1 to 7, wherein,
when a selection input of the user is received with respect to the plurality of segments,
the body part requiring improvement includes one or more segments corresponding to the selection input of the user.

9. The electronic device (101; 200) of any one of claims 1 to 8, wherein the instructions, when executed individually or collectively by the at least one processor (120; 210), cause the electronic device (101; 200) to:
determine a priority of the exercise data, based on one or more of the user information (205) and the exercise history (207) of the user; and
generate the exercise plan based on the priority.

10. The electronic device (101; 200) of any one of claims 1 to 9, wherein the
exercise plan includes one or more of exercise type, exercise frequency, and exercise intensity, and
is generated based on the body part requiring improvement.

11. A method of operating an electronic device (101; 200), the method comprising:
outputting a plurality of body shape images based on one or more of a user image (203; 450; 710) and user information (205);
determining, based on a selection input of a user, one or more body shape images from among the plurality of body shape images as a target body shape; and
providing an exercise plan based on one or more of the target body shape and an exercise history (207) of the user.

12. The method of claim 11, wherein the outputting of the plurality of body shape images comprises:
obtaining a plurality of segments corresponding to body parts of the user from the user image (203; 450; 710); and
generating the plurality of body shape images by transforming the plurality of segments.

13. The method of any one of claims 11 and 12, wherein the user information (205) includes body change data of the user.

14. The method of any one of claims 11 to 13, comprising:
inferring, based on the body change data of the user, change ratios for respective body parts of the user; and
transforming the plurality of segments based on the change ratios.

15. The method of any one of claims 11 to 14, comprising:
determining one or more segments corresponding to a selection input of the user from among the plurality of segments; and
outputting an image in which the one or more segments corresponding to the selection input of the user are transformed based on the change ratio.
